# EUROPEAN PATENT APPLICATION

(11) **EP 4 174 341 A1**
(43) Date of publication of application: **03.05.2023**
(21) Application number: 22203466.2
(22) Date of filing: 25.10.2022
(51) Int. Cl.: F16D 65/14, F16D 55/228, F16D 65/00, F16D 65/18, F16D 65/62

(54) **BRAKE FOR VEHICLE AND VEHICLE**

(30) Priority: 02.11.2021 CN 202122661216 U
(71) Applicant: Nio Technology (Anhui) Co., Ltd, Hefei City, Anhui 230601 (CN)
(72) Inventor: WANG, Rui, Jiading Shanghai (CN); MA, Yiming, Jiading Shanghai (CN); SHI, Yongxiang, Jiading Shanghai (CN)
(74) Representative: Vossius & Partner Patentanwälte Rechtsanwälte mbB

(57) **Abstract**

The disclosure relates to the technical field of vehicle accessories, and in particular to a brake for a vehicle and a vehicle. The disclosure aims at solving the problems present in existing brakes for a vehicle that oil passages are relatively long, an angle at which each oil passage is arranged is relatively large, debris generated in a machining process remains in the oil passages and then causes blockage of the oil passages, and drilling holes in an inner caliper body and an outer caliper body to form the oil passages further reduces mechanical strength of the inner caliper body and the outer caliper body. For this purpose, the brake for a vehicle according to the disclosure comprises a first caliper body and a second caliper body, wherein the first caliper body is fixedly connected to the second caliper body, the first caliper body and the second caliper body are each provided with a piston chamber, a piston is arranged in each piston chamber, the first caliper body is provided with a first oil passage penetrating through the piston chamber in the first caliper body, the second caliper body is provided with a second oil passage penetrating through the piston chamber in the second caliper body, and the first oil passage fluidly connects with the second oil passage by means of a hard oil pipe. The foregoing arrangement can simplify oil passage pathways in the first caliper body and the second caliper body.

## Description

### Technical Field

The disclosure relates to the technical field of vehicle accessories, and in particular to a brake for a vehicle and a vehicle.

### Background Art

With the development of vehicle industry, consumers have increasingly higher requirements for safety performance of vehicles, and performance of a brake as an important safety device is particularly important.

In existing brakes for a vehicle, holes are usually drilled in an inner caliper body and an outer caliper body to form a plurality of oil passages, and by means of the oil passages, the inner caliper body, the outer caliper body and piston chambers fluidly connect with one another.

However, due to principle and structural restrictions, the existing brakes for a vehicle each usually comprise a plurality of piston chambers, so that a plurality of oil passages need to be provided in the inner caliper body and the outer caliper body to implement fluid connection between the inner caliper body, the outer caliper body and the plurality of piston chambers. As a result, the problems are usually present in existing brakes for a vehicle that oil passages are relatively long, an angle at which each oil passage is arranged is relatively large, tool wear is serious in a machining process, machining time is relatively long, debris generated in the machining process remains in the oil passages and then causes blockage of the oil passages, and drilling holes in the inner caliper body and the outer caliper body to form the oil passages further reduces mechanical strength of the inner caliper body and the outer caliper body.

Accordingly, there is a need in the art for a new brake for a vehicle to solve the foregoing problems.

### Summary of the Disclosure

To solve the foregoing problems in the prior art, that is, to solve the problems usually present in existing brakes for a vehicle that oil passages are relatively long, an angle at which each oil passage is arranged is relatively large, tool wear is serious in a machining process, machining time is relatively long, debris generated in the machining process remains in the oil passages and then causes blockage of the oil passages, and drilling holes in an inner caliper body and an outer caliper body to form the oil passages further reduces mechanical strength of the inner caliper body and the outer caliper body, the disclosure provides a brake for a vehicle, comprising a first caliper body and a second caliper body which are fixedly connected to each other, wherein the first caliper body and the second caliper body are each provided with a piston chamber, a piston is arranged in the piston chamber, the first caliper body is provided with a first oil passage penetrating through the piston chamber in the first caliper body, the second caliper body is provided with a second oil passage penetrating through the piston chamber in the second caliper body, and the first oil passage fluidly connects with the second oil passage by means of a hard oil pipe.

In a preferred technical solution of the brake for a vehicle, the first caliper body is provided with a first piston chamber and a second piston chamber, the second caliper body is provided with a third piston chamber and a fourth piston chamber, the first oil passage penetrates through the first piston chamber and the second piston chamber, the second oil passage penetrates through the third piston chamber and the fourth piston chamber, and pistons are arranged in the first piston chamber, the second piston chamber, the third piston chamber and the fourth piston chamber.

In a preferred technical solution of the brake for a vehicle, the first oil passage comprises a first oil outlet and a second oil outlet, the second oil passage comprises a third oil outlet and a fourth oil outlet, the second oil outlet fluidly connects with the fourth oil outlet by means of the hard oil pipe, and the first oil outlet and the third oil outlet are each provided with an air vent screw.

In a preferred technical solution of the brake for a vehicle, the first piston chamber and the second piston chamber are symmetrically arranged along a first central line of the first caliper body, and the third piston chamber and the fourth piston chamber are symmetrically arranged along a first central line of the second caliper body.

In a preferred technical solution of the brake for a vehicle, the first piston chamber and the second piston chamber are respectively symmetrical with the third piston chamber and the fourth piston chamber with respect to a plane of connection between the first caliper body and the second caliper body.

In a preferred technical solution of the brake for a vehicle, the first caliper body is further provided with an oil inlet, and the oil inlet fluidly connects with the first piston chamber.

In a preferred technical solution of the brake for a vehicle, the first caliper body is bolted or riveted to the second caliper body.

In a preferred technical solution of the brake for a vehicle, two ends of the first oil passage and two ends of the second oil passage are each provided with a thread, the first oil passage is in threaded connection with the hard oil pipe and the air vent screw on the first oil outlet, respectively, and the second oil passage is in threaded connection with the hard oil pipe and the air vent screw on the third oil outlet, respectively.

In a preferred technical solution of the brake for a vehicle, the brake further comprises a first friction disc and a second friction disc, wherein the first friction disc and the second friction disc are respectively arranged on two sides of a brake disc of the vehicle; after being pushed, the piston in the first piston chamber and the piston in the second piston chamber are configured to separately come into contact with the first friction disc and push the first friction disc; and after being pushed, the piston in the third piston chamber and the piston in the fourth piston chamber are configured to separately come into contact with the second friction disc and push the second friction disc.

The disclosure further provides a vehicle. The vehicle comprises a brake for a vehicle according to any one of the foregoing technical solutions.

It can be understood by those skilled in the art that, in the technical solutions of the disclosure, a brake comprises a first caliper body and a second caliper body which are fixedly connected to each other, wherein the first caliper body and the second caliper body are each provided with a piston chamber, a piston is arranged in each piston chamber, the first caliper body is provided with a first oil passage penetrating through the piston chamber in the first caliper body, the second caliper body is provided with a second oil passage penetrating through the piston chamber in the second caliper body, and the first oil passage fluidly connects with the second oil passage by means of a hard oil pipe.

Through the foregoing arrangement, in the brake for a vehicle according to the disclosure, the first oil passage fluidly connects with the second oil passage by means of the hard oil pipe, and the first oil passage and the second oil passage are arranged to penetrate through the piston chambers in the first caliper body and the piston chambers in the second caliper body, respectively, so that the first oil passage, the second oil passage, the piston chambers in the first caliper body and the piston chambers in the second caliper body fluidly connect with each other to form a complete hydraulic oil circuit. Therefore, oil passage pathways in the first caliper body and the second caliper body are simplified, thereby solving the problems present in existing brakes for a vehicle that oil passages are relatively long, an angle at which each oil passage is arranged is relatively large, tool wear is serious in a machining process, machining time is relatively long, debris generated in the machining process remains in the oil passages and then causes blockage of the oil passages, and drilling holes in an inner caliper body and an outer caliper body to form the oil passages further reduces mechanical strength of the inner caliper body and the outer caliper body.

### Brief Description of the Drawings

A brake for a vehicle according to the disclosure is described below with reference to accompanying drawings. In the accompanying drawings:
Fig. 1 is a schematic diagram of an overall structure of a brake for a vehicle according to the disclosure;
Fig. 2 is a schematic structural diagram of assembly of a hard oil pipe of a brake for a vehicle according to the disclosure; and
Fig. 3 is a schematic diagram of a cross-sectional structure of a brake for a vehicle according to the disclosure.

### List of reference numerals:

1 - First caliper body; 11 - First oil passage; 111 - First oil outlet; 112 - Second oil outlet; 12 - Piston chamber; 121 - First piston chamber; 122 - Second piston chamber; 123 - Third piston chamber; 124 - Fourth piston chamber; 13 - First friction disc; 14 - Oil inlet; 15 - Piston; 16 - First central line of the first caliper body;
2 - Second caliper body; 21 - Second oil passage; 211 - Third oil outlet; 212 - Fourth oil outlet; 22 - Second friction disc; 23 - First central line of the second caliper body;
3 - Hard oil pipe;
4 - Air vent screw.

### Detailed Description of Embodiments

Preferred implementations of the disclosure are described below with reference to the accompanying drawings. It should be understood by those skilled in the art that these implementations are only for explaining the technical principles of the disclosure and are not intended to limit the scope of protection of the disclosure. Those skilled in the art can make adjustments according to requirements so as to adapt to specific application scenarios. For example, although the specification describes a connection relationship between a first caliper body and a second caliper body by taking bolted connection between the first caliper body and the second caliper body as an example, the connection relationship between the first caliper body and the second caliper body in the disclosure is not limited thereto, provided that the connection relationship can meet assembly requirements for fixed installation between the first caliper body and the second caliper body. For example, the first caliper body may alternatively be fixedly connected to the second caliper body by riveting.

It should be noted that, in the description of the disclosure, the terms that indicate the direction or positional relationship, such as "center", "inner", and "outer", are based on the direction or positional relationship shown in the figures, which is merely for ease of description instead of indicating or implying that the device or element must have a particular orientation and be constructed and operated in a particular orientation, and therefore, should not be construed as limiting the disclosure. In addition, the terms "first", "second", "third" and "fourth" are for descriptive purposes only and should not be construed as indicating or implying relative importance.

In addition, it should also be noted that, in the description of the disclosure, the term "connect" should be interpreted in a broad sense unless explicitly defined and limited otherwise. For example, a connection may be a fixed connection, a detachable connection, or an integral connection; or may be a direct connection, or an indirect connection by means of an intermediate medium. For those skilled in the art, the specific meanings of the foregoing terms in the disclosure can be interpreted according to a specific situation.

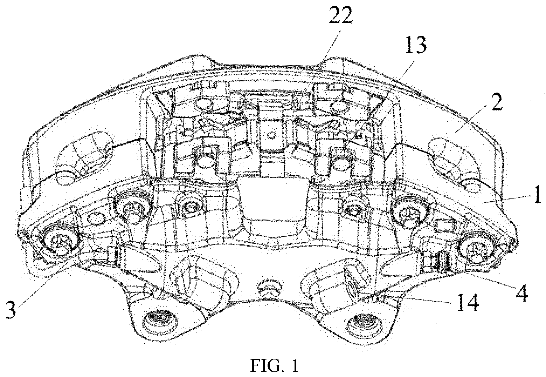

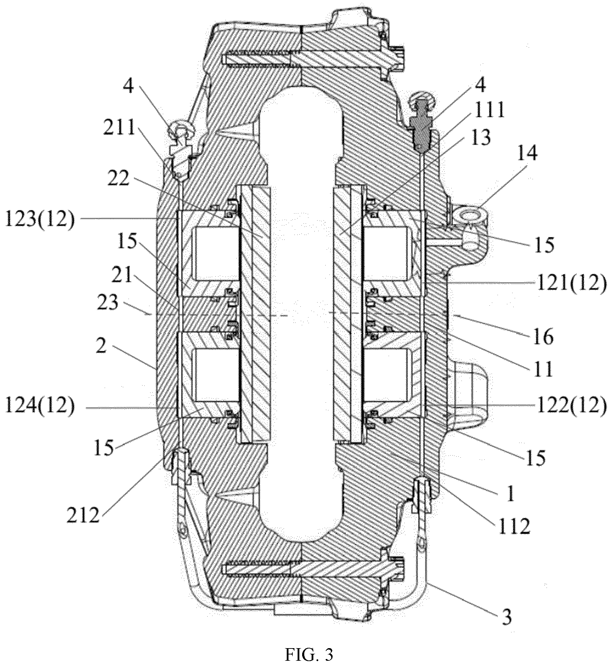

Referring to Figs. 1 and 3, a brake for a vehicle according to the disclosure is described first.

As shown in Figs. 1 and 3, to solve the problems usually present in existing brakes for a vehicle that oil passages are relatively long, an angle at which each oil passage is arranged is relatively large, tool wear is serious in a machining process, machining time is relatively long, debris generated in the machining process remains in the oil passages and then causes blockage of the oil passages, and drilling holes in an inner caliper body and an outer caliper body to form the oil passages further reduces mechanical strength of the inner caliper body and the outer caliper body, the brake for a vehicle according to the disclosure comprises a first caliper body 1 and a second caliper body 2 which are fixedly connected to each other, wherein the first caliper body 1 and the second caliper body 2 are each provided with a piston chamber 12, a piston 15 is arranged in the piston chamber 12, the first caliper body 1 is provided with a first oil passage 11 penetrating through the piston chamber 12 in the first caliper body 1, the second caliper body 2 is provided with a second oil passage 21 penetrating through the piston chamber 12 in the second caliper body 2, and the first oil passage 11 fluidly connects with the second oil passage 21 by means of a hard oil pipe 3.

Through the foregoing arrangement, in the brake for a vehicle according to the disclosure, the first oil passage 11 fluidly connects with the second oil passage 21 by means of the hard oil pipe 3, and the first oil passage 11 and the second oil passage 21 are arranged to penetrate through the piston chambers 12 in the first caliper body 1 and the piston chambers 12 in the second caliper body 2, respectively, so that the first oil passage 11, the second oil passage 21, the piston chambers 12 in the first caliper body 1 and the piston chambers 12 in the second caliper body 2 fluidly connect with each other to form a complete hydraulic oil circuit. Therefore, oil passage pathways in the first caliper body 1 and the second caliper body 2 are simplified, thereby solving the problems present in existing brakes for a vehicle that oil passages are relatively long, an angle at which each oil passage is arranged is relatively large, tool wear is serious in a machining process, machining time is relatively long, debris generated in the machining process remains in the oil passages and then causes blockage of the oil passages, and drilling holes in an inner caliper body and an outer caliper body to form the oil passages further reduces mechanical strength of the inner caliper body and the outer caliper body.

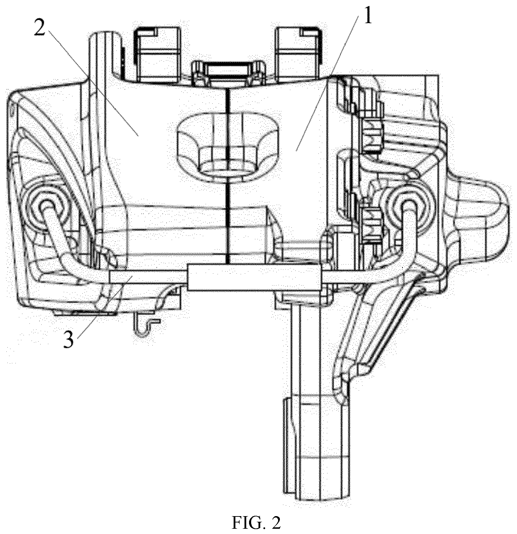

Further referring to Figs. 1 to 3, a brake for a vehicle according to the disclosure is described in detail below.

As shown in Fig. 3, in a possible implementation, the first caliper body 1 is provided with a first piston chamber 121 and a second piston chamber 122, the second caliper body 2 is provided with a third piston chamber 123 and a fourth piston chamber 124, the first oil passage 11 penetrates through the first piston chamber 121 and the second piston chamber 122, the second oil passage 21 penetrates through the third piston chamber 123 and the fourth piston chamber 124, and pistons 15 are arranged in the first piston chamber 121, the second piston chamber 122, the third piston chamber 123 and the fourth piston chamber 124.

In this embodiment, the first oil passage 11 penetrates through the first piston chamber 121 and the second piston chamber 122 in the first caliper body 1 and the second oil passage 21 penetrates through the third piston chamber 123 and the fourth piston chamber 124 in the second caliper body 2, so that the first oil passage 11 fluidly connects with the first piston chamber 121 and the second piston chamber 122, and the second oil passage 21 fluidly connects with the third piston chamber 123 and the fourth piston chamber 124, then a necessary oil pathway is provided to enable the first oil passage 11 to fluidly connect with the second oil passage 21 by means of the hard oil pipe 3 so as to enable the first oil passage 11, the second oil passage 21, the first piston chamber 121, the second piston chamber 122, the third piston chamber 123 and the fourth piston chamber 124 to form a complete pathway.

As shown in Fig. 3, in a possible implementation, the brake further comprises a first friction disc 13 and a second friction disc 22, wherein the first friction disc 13 and the second friction disc 22 are respectively arranged on two sides of a brake disc (not shown in the figures) of the vehicle; after being pushed, the piston 15 in the first piston chamber 121 and the piston 15 in the second piston chamber 122 are configured to separately come into contact with the first friction disc 13 and push the first friction disc 13; and after being pushed, the piston 15 in the third piston chamber 123 and the piston 15 in the fourth piston chamber 124 are configured to separately come into contact with the second friction disc 22 and push the second friction disc 22.

Through the foregoing arrangement, after being pushed, the pistons 15 in the first piston chamber 121 and the second piston chamber 122 and the pistons 15 in the third piston chamber 123 and the fourth piston chamber 124 come into contact with the first friction disc 13 and the second friction disc 22, respectively, and push the first friction disc 13 and the second friction disc 22 close to each other, so that the first friction disc 13 and the second friction disc 22 clamp the brake disc to achieve a braking effect.

As shown in Fig. 3, in this embodiment, to enable the pistons 15 in the first piston chamber 121 and the second piston chamber 122 and the pistons 15 in the third piston chamber 123 and the fourth piston chamber 124 to provide uniform braking force to the first friction disc 13 and the second friction disc 22, respectively, so as to improve the braking effect of the brake, in this embodiment, the first piston chamber 121 and the second piston chamber 122 are symmetrically arranged along a first central line 16 of the first caliper body, and the third piston chamber 123 and the fourth piston chamber 124 are symmetrically arranged along a first central line 23 of the second caliper body.

In this embodiment, the first piston chamber 121 and the second piston chamber 122 are symmetrically arranged along the first central line of the first caliper body 1, and the third piston chamber 123 and the fourth piston chamber 124 are symmetrically arranged along the first central line of the second caliper body 2, so that the first friction disc 13 and the second friction disc 22 can be respectively subjected to the uniform braking force in a braking process.

It should be noted that, as shown in Fig. 3, in this embodiment, the first central line 16 of the first caliper body refers to a central line of the first caliper body 1 in a direction perpendicular to the first friction disc 13; and the first central line 23 of the second caliper body refers to a central line of the second caliper body 2 in a direction perpendicular to the second friction disc 22.

Further, in this embodiment, the first piston chamber 121 and the second piston chamber 122 are respectively symmetrically arranged with the third piston chamber 123 and the fourth piston chamber 124 with respect to a plane of connection between the first caliper body 1 and the second caliper body 2.

Through the foregoing arrangement, in the braking process, while the first friction disc 13 and the second friction disc 22 can be respectively subjected to the uniform braking force, points of application of the braking force applied to the first friction disc 13 and the second friction disc 22 are also distributed symmetrically along the plane of connection between the first caliper body 1 and the second caliper body 2, so that after the first friction disc 13 and the second friction disc 22 clamp the brake disc in the braking process, clamping force applied to the brake disc is more uniform to improve the braking effect.

As shown in Figs. 1 and 3, in a possible implementation, the first oil passage 11 comprises a first oil outlet 111 and a second oil outlet 112, the second oil passage 21 comprises a third oil outlet 211 and a fourth oil outlet 212, the second oil outlet 112 fluidly connects with the fourth oil outlet 212 by means of the hard oil pipe 3, and the first oil outlet 111 and the third oil outlet 211 are each provided with an air vent screw 4.

Through the foregoing arrangement, on one hand, the second oil outlet 112 fluidly connects with the fourth oil outlet 212 by means of the hard oil pipe 3 to implement fluid connection between the first oil passage 11 and the second oil passage 21; and on the other hand, the first oil outlet 111 and the third oil outlet 211 are each provided with the air vent screw 4 to implement sealing and venting of the first oil passage 11 and the second oil passage 21. When gas exists in the entire oil pathway, venting can be performed by loosening the air vent screw 4.

As shown in Fig. 3, to make it convenient to assemble the hard oil pipe 3 on the first oil passage 11 and the second oil passage 21, respectively and install the air vent screws 4 on the first oil passage 11 and the second oil passage 21, respectively, in this embodiment, two ends of the first oil passage 11 and two ends of the second oil passage 21 are each provided with a thread, the first oil passage 11 is in threaded connection with the hard oil pipe 3 and the air vent screw 4 on the first oil outlet 111, respectively, and the second oil passage 21 is in threaded connection with the hard oil pipe 3 and the air vent screw 4 on the third oil outlet 211, respectively.

As shown in Fig. 3, in a possible implementation, the first caliper body 1 is further provided with an oil inlet 14, and the oil inlet 14 fluidly connects with the first piston chamber 121.

Through the foregoing arrangement, a brake fluid can enter the first piston chamber 121 through the oil inlet 14 in the braking process, so that the brake fluid can flow through and fill the entire hydraulic oil circuit.

In addition, as shown in Fig. 3, in this embodiment, the first caliper body 1 is bolted to the second caliper body 2 to meet assembly requirements for fixed installation between the first caliper body 1 and the second caliper body 2.

It can be understood that, although in this embodiment, a connection relationship between the first caliper body 1 and the second caliper body 2 is described by taking bolted connection between the first caliper body 1 and the second caliper body 2 as an example, the connection relationship between the first caliper body 1 and the second caliper body 2 in this embodiment is not limited thereto, provided that the connection relationship can meet assembly requirements for fixed installation between the first caliper body 1 and the second caliper body 2. For example, the first caliper body 1 may alternatively be fixedly connected to the second caliper body 2 by riveting.

In summary, through the foregoing arrangement, in the brake for a vehicle according to the disclosure, the first oil passage 11 fluidly connects with the second oil passage 21 by means of the hard oil pipe 3, and the first oil passage 11 and the second oil passage 21 are arranged to penetrate through the piston chambers 12 in the first caliper body 1 and the piston chambers 12 in the second caliper body 2, respectively, so that the first oil passage 11, the second oil passage 21, the piston chambers 12 in the first caliper body 1 and the piston chambers 12 in the second caliper body 2 fluid connect with each other to form a complete hydraulic oil circuit. Therefore, oil passage pathways in the first caliper body 1 and the second caliper body 2 are simplified, thereby solving the problems present in existing brakes for a vehicle that oil passages are relatively long, an angle at which each oil passage is arranged is relatively large, tool wear is serious in a machining process, machining time is relatively long, debris generated in the machining process remains in the oil passages and then causes blockage of the oil passages, and drilling holes in an inner caliper body and an outer caliper body to form the oil passages further reduces mechanical strength of the inner caliper body and the outer caliper body.

It should be noted that the foregoing implementations are only used to explain the principles of the disclosure, and are not intended to limit the scope of protection of the disclosure. Those skilled in the art can adjust the foregoing structures without departing from the principle of the disclosure, so that the disclosure is applicable to more specific application scenarios.

In addition, the disclosure further provides a vehicle. The vehicle is provided with a brake for a vehicle according to any one of the foregoing implementations.

In addition, those skilled in the art can understand that features of different embodiments of the disclosure can be arbitrarily combined, and the combined solutions are all within the scope of protection of the disclosure. For example, in the claims of the disclosure, any one of the claimed embodiments can be used in any combination.

Heretofore, the technical solutions of the disclosure have been described in conjunction with the preferred implementations shown in the accompanying drawings, however, those skilled in the art may readily understand that the scope of protection of the disclosure is obviously not limited to these specific implementations. Those skilled in the art can make equivalent changes or replacements to the related technical features without departing from the principles of the disclosure, and all the technical solutions after the changes or the replacements fall within the scope of protection of the disclosure.

## Claims

1. A brake for a vehicle, comprising a first caliper body (1) and a second caliper body (2) which are fixedly connected to each other, wherein the first caliper body (1) and the second caliper body (2) are each provided with a piston chamber (12), a piston (15) is arranged in each piston chamber (12), the first caliper body (1) is provided with a first oil passage (11) penetrating through the piston chamber (12) in the first caliper body (1), the second caliper body (2) is provided with a second oil passage (21) penetrating through the piston chamber (12) in the second caliper body (2), and the first oil passage (11) fluidly connects with the second oil passage (21) by means of a hard oil pipe (3).

2. The brake for a vehicle according to claim 1, wherein the first caliper body (1) is provided with a first piston chamber (121) and a second piston chamber (122), the second caliper body (2) is provided with a third piston chamber (123) and a fourth piston chamber (124), the first oil passage (11) penetrates through the first piston chamber (121) and the second piston chamber (122), the second oil passage (21) penetrates through the third piston chamber (123) and the fourth piston chamber (124), and pistons (15) are arranged in the first piston chamber (121), the second piston chamber (122), the third piston chamber (123) and the fourth piston chamber (124).

3. The brake for a vehicle according to claim 1 or 2, wherein the first oil passage (11) comprises a first oil outlet (111) and a second oil outlet (112), the second oil passage (21) comprises a third oil outlet (211) and a fourth oil outlet (212), the second oil outlet (112) fluidly connects with the fourth oil outlet (212) by means of the hard oil pipe (3), and the first oil outlet (111) and the third oil outlet (211) are each provided with an air vent screw (4).

4. The brake for a vehicle according to claim 2 or 3, wherein the first piston chamber (121) and the second piston chamber (122) are symmetrically arranged along a first central line (16) of the first caliper body (1), and the third piston chamber (123) and the fourth piston chamber (124) are symmetrically arranged along a first central line (23) of the second caliper body (2).

5. The brake for a vehicle according to claim 2, 3 or 4, wherein the first piston chamber (121) and the second piston chamber (122) are respectively symmetrical with the third piston chamber (123) and the fourth piston chamber (124) with respect to a plane of connection between the first caliper body (1) and the second caliper body (2).

6. The brake for a vehicle according to any one of claims 2 to 5, wherein the first caliper body (1) is further provided with an oil inlet (14), and the oil inlet (14) fluidly connects with the first piston chamber (121).

7. The brake for a vehicle according to any one of claims 1 to 6, wherein the first caliper body (1) is bolted or riveted to the second caliper body (2).

8. The brake for a vehicle according to any one of claims 3 to 7, wherein two ends of the first oil passage (11) and two ends of the second oil passage (21) are each provided with a thread, the first oil passage (11) is in threaded connection with the hard oil pipe (3) and the air vent screw (4) on the first oil outlet (111), respectively, and the second oil passage (21) is in threaded connection with the hard oil pipe (3) and the air vent screw (4) on the third oil outlet (211), respectively.

9. The brake for a vehicle according to any one of claims 2 to 8, further comprising a first friction disc (13) and a second friction disc (22), wherein the first friction disc (13) and the second friction disc (22) are respectively arranged on two sides of a brake disc of the vehicle; after being pushed, the piston (15) in the first piston chamber (121) and the piston (15) in the second piston chamber (122) configured to separately come into contact with the first friction disc (13) and push the first friction disc (13); and after being pushed, the piston (15) in the third piston chamber (123) and the piston (15) in the fourth piston chamber (124) configured to separately come into contact with the second friction disc (22) and push the second friction disc (22).

10. A vehicle comprising a brake for the vehicle according to any one of claims 1 to 9.
